# EUROPEAN PATENT APPLICATION

(11) **EP 3 284 937 A1**
(43) Date of publication of application: **21.02.2018**
(21) Application number: 16184875.9
(22) Date of filing: 19.08.2016
(51) Int. Cl.: F02D 41/22, F02D 33/00, F02M 31/125, F02M 31/18, F02M 37/00

(54) **SYSTEM FOR DETECTING A LEAK IN A FUEL SYSTEM**

(71) Applicant: Plastic Omnium Advanced Innovation and Research, 1120 Bruxelles (BE)
(72) Inventor: CHAUSSINAND, Antoine, 1020 BRUXELLES (BE); REUTHER, Paul Daniel, US-OXFORD, MI 48371 (US); CRIEL, Bjorn, 1750 SINT-MARTENS-LENNIK (BE); HILL, David, Commerce Township, MI 48382 (US)
(74) Representative: Potdevin, Emmanuel Eric

(57) **Abstract**

It is proposed a fuel tank leak detection system comprising:
a test cell for receiving a portion of on-board fuel;
a heater mounted within the test cell for heating the fuel in the test cell so as to create a pressure build-up within the fuel tank; and
a controller for:
- obtaining a first information relative to the amount of pressure build-up created within the fuel tank and a second information relative to the amount of energy introduced by the heater in the test cell; and
- detecting a leak using said first and second information.

## Description

### Field of the Invention

The present invention relates to the detection of leaks in a liquid fuel system for a vehicle. More precisely, it relates to a system for detecting a leak in a fuel tank, for example on board a hybrid vehicle.

### Background of the Invention

US7220386B2 discloses an on-board engine fuel properties measurement system. The known system includes: a test cell for receiving a portion of on-board fuel; a heater mounted within the test cell for heating the fuel in the test cell; a circuit for measuring electrical properties of the heater and determining the elapsed time until a rapid heater resistance increase occurs, and a controller for receiving the measured electrical properties and elapsed time and for determining a fuel volatility index for the on-board fuel using one or more parameters determined at least in part by the electrical properties and elapsed time. US7220386B2 is not concerned with leak detection, nor is it possible to use this known system for a leak diagnostic test.

### Summary of the Invention

It is an object of the invention to provide a leak detection system that can be run when the combustion engine is off on a regular car, or on a hybrid vehicle regardless of whether or not the internal combustion engine is ever running.
According to a first aspect of the invention there is provided a fuel tank leak detection system comprising:
a test cell for receiving a portion of on-board fuel;
a heater mounted within the test cell for heating the fuel in the test cell so as to create a pressure build-up within the fuel tank; and
a controller for:
   - obtaining a first information relative to the amount of pressure build-up created within the fuel tank and a second information relative to the amount of energy introduced by the heater in the test cell; and
   - detecting a leak using said first and second information.
The idea behind the present invention is to correlate the amount of pressure build-up created within the tank to the amount of energy introduced by the heater within the test cell, and determine the presence or absence of a leak upon the result of this correlation. In a particular embodiment, it is proposed to use a predetermined amount of energy for heating a predetermined amount of fuel contained in the test cell, so as to obtain an expected pressure build-up within the tank. Thus, the pressure evolution within the tank can be predicted. Advantageously, the pressure within the tank is monitored. For example, if a deviation is detected between the monitored pressure evolution and the predicted pressure evolution, it may be concluded that a leak is present in the tank.

In a particular embodiment, the test cell is configured such that it prevents heat transfer to the rest of the fuel present in the tank. Therefore, a pressure build-up can be produced quickly and in a precise manner. Advantageously, the test cell is located at least partially inside the fuel tank and/or on a wall of the fuel tank. According to a preferred embodiment of the invention, the test cell is entirely located inside the fuel tank.

In an embodiment, the test cell comprises an inlet for receiving a portion of on-board fuel (i.e. portion of fuel contained in the fuel tank) and an outlet for releasing fuel vapor into a vapor space within the fuel tank.
The heater heats the fuel in the test cell so that the fuel is vaporized creating fuel vapor within the test cell. Then fuel vapor is released in the vapor space (also called vapor dome) of the fuel tank for pressure build-up.

In a particular embodiment, the inlet of the test cell can be located in the liquid space of the fuel tank. In this way, the test cell can be naturally re-filled with fuel. Advantageously, the inlet can comprise a check valve configured to prevent the fuel in the test cell to flow back into the tank. Alternatively, a fuel metering device (a pump or equivalent means) can be used to convey fuel to the inlet of the test cell so as to fill/refill the test cell with the required amount of fuel.

In an embodiment, the test cell is mounted on or integrated in a fuel tank accessory.
It is then here proposed to enhance a fuel tank accessory by adding to it a vaporization function.
In one example, the test cell can be attached to the outside of the fuel tank accessory by any suitable means (such as clipping, welding, etc.).
In another example, the test cell can be integrated or placed inside the fuel tank accessory. In this case, the fuel tank accessory may be provided with an orifice (forming the outlet of the test cell) in fluid communication with the vapor space.

Advantageously, the fuel tank accessory is chosen from the following group: a fuel pumping device, a fuel level measuring device, a reinforcing structure, a venting device.

According to a particular embodiment of the invention, the test cell comprises at least one heater adapted to thermally decompose liquid fuel into fuel vapor. In a particular embodiment of the invention, the heater can comprise resistive heating elements. These resistive heating elements may be metallic heating filaments (wires), flexible heaters (that is to say heaters comprising one or more resistive track(s) affixed to a film or placed between two films (that is to say two substantially flat supports, the material and thickness of which are such that they are flexible)), or any other type of resistive elements that have a shape, size and flexibility suitable for being placed inside the test cell or incorporated in the wall delimiting the test cell. PTC (Positive Temperature Coefficient) resistors are particularly suitable for heating.
In another particular embodiment of the invention, the heating of fuel in the test cell can be performed using the dissipated heat of the engine (for instance, a flow of the liquid engine cooling system) and/or exhaust line (gases).
Advantageously, the test cell can be surrounded by thermal isolation or by phase change materials (PCM) or can contain PCM material, so that fuel present in the test cell can start or continue being converted into fuel vapor while the vehicle is at rest (i.e. at engine stop).

According to a particular embodiment of the invention, the fuel tank leak detection system comprises a pressure sensor for monitoring the pressure in the fuel tank, the first information relative to the amount of pressure build-up within the fuel tank being determined using the monitored pressure.

According to a particular embodiment of the invention, the controller is configured for:
- obtaining a third information relative to a pressure decay within the fuel tank after the creation of pressure build-up within the fuel tank;
- detecting a leak using said first, second and third information. This allows detecting small leak orifice.

### Brief description of the drawings

The following drawings are illustrative of exemplary embodiments and therefore do not limit the scope of the invention. They are presented to assist in providing a proper understanding of the invention. The present invention will hereinafter be described in conjunction with the accompanying drawings, wherein like referenced numerals denote like elements, and:
- Figure 1 is a schematic view of a first exemplary embodiment of a vehicle fuel storage system to which the present invention may be applied;
- Figure 2 is a schematic view of a second exemplary embodiment of a vehicle fuel storage system to which the present invention may be applied;
- Figure 3 is a schematic view of a third exemplary embodiment of a vehicle fuel storage system to which the present invention may be applied;
- Figure 4 is a schematic view of a fourth exemplary embodiment of a vehicle fuel storage system to which the present invention may be applied;
- Figure 5 is a schematic view of a fifth exemplary embodiment of a vehicle fuel storage system to which the present invention may be applied;
- Figure 6 is a schematic view of a sixth exemplary embodiment of a vehicle fuel storage system to which the present invention may be applied;
- Figures 7 and 8 illustrate exemplary embodiments of the filling of a test cell.
- Figure 9 illustrates a flowchart of operations depicting logical operational steps for detecting a leak in a tank, in accordance with a particular embodiment of the invention.

### Detailed description of the Invention

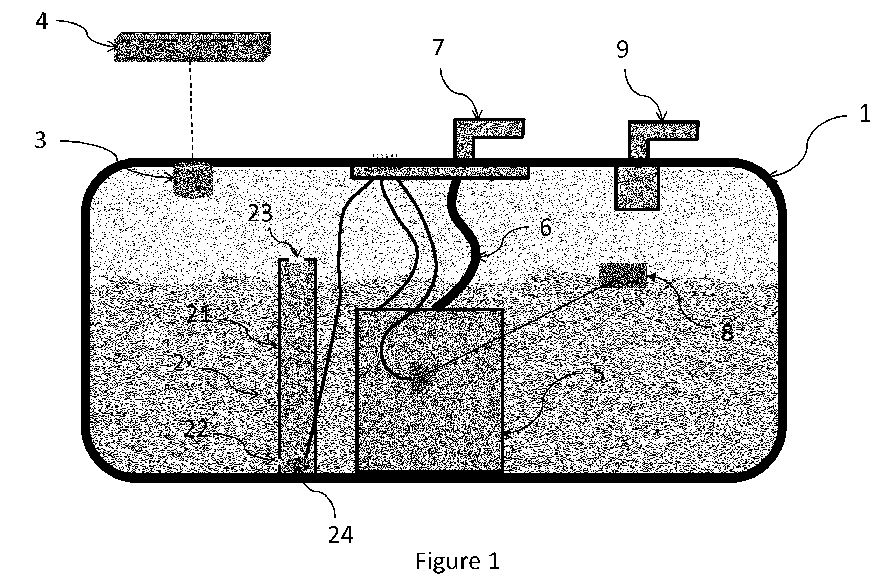

Figure 1 illustrates a first exemplary embodiment of a vehicle fuel storage system. As illustrated in the example of Figure 1, the system comprises:
- a fuel tank [1]; and
- a fuel tank leak detection system according to a first particular embodiment of the present invention.

When liquid fuel is present in the tank [1], the space not occupied by liquid fuel will be filled with a gas mixture that contains an amount of fuel vapor, which is dependent on the temperature and the volatility of the fuel. This space is therefore referred to as the "vapor space".
In the example of Figure 1, the fuel tank leak detection system comprises a test cell [2], a pressure sensor [3] and a controller [4].

The tank [1] comprises a fuel pump module [5] configured to convey liquid fuel presents in the tank through a main fuel line [6] towards a fuel outlet port [7]. The fuel pump module [5] comprises a float-based level gauge for measuring fuel level in the tank. The level gauge comprises a float [8]. The tank [1] also comprises a vent valve [9] (or venting module) configured to release vapor from the tank [1].

The test cell [2] comprises a housing [21] with an inlet [22] through which liquid fuel can enter and an outlet [23] through which fuel vapor can escape into the vapor space. For example, the housing [21] is configured to store a predetermined amount of fuel, before starting a leak test. In a particular embodiment, the housing is configured to receive and store between about 1% to 10% of the total fuel capacity of the fuel tank, preferably 2% to 4%. Thus, it can be obtained a fast and full evaporation. Advantageously, the inlet [22] can comprise a check valve (not illustrated) configured to prevent the fuel in the housing [21] to flow back into the tank [1].

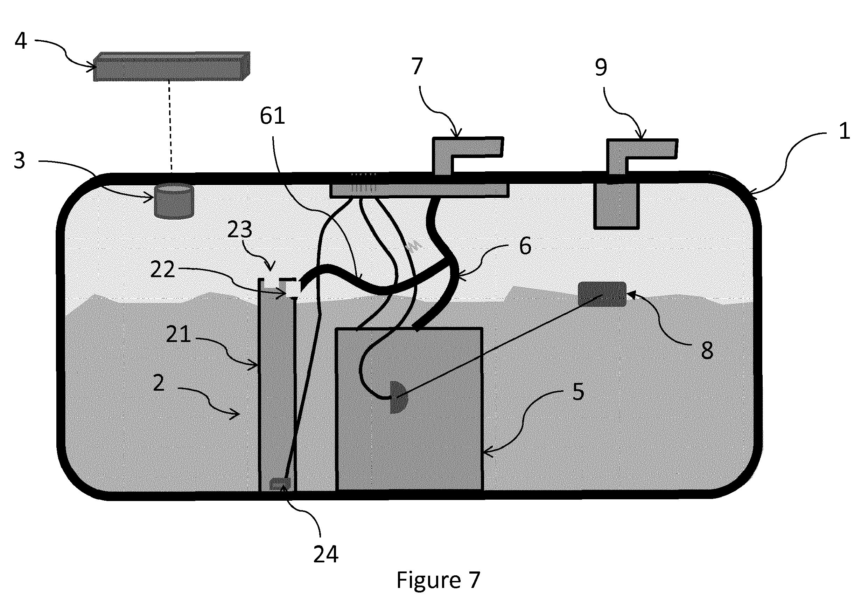

Figure 7 illustrates an exemplary embodiment in which the inlet [22] is placed in or near the top side of the housing [21]. The inlet [22] is connected to a secondary fuel line [61] branched-off from the main fuel line [6].

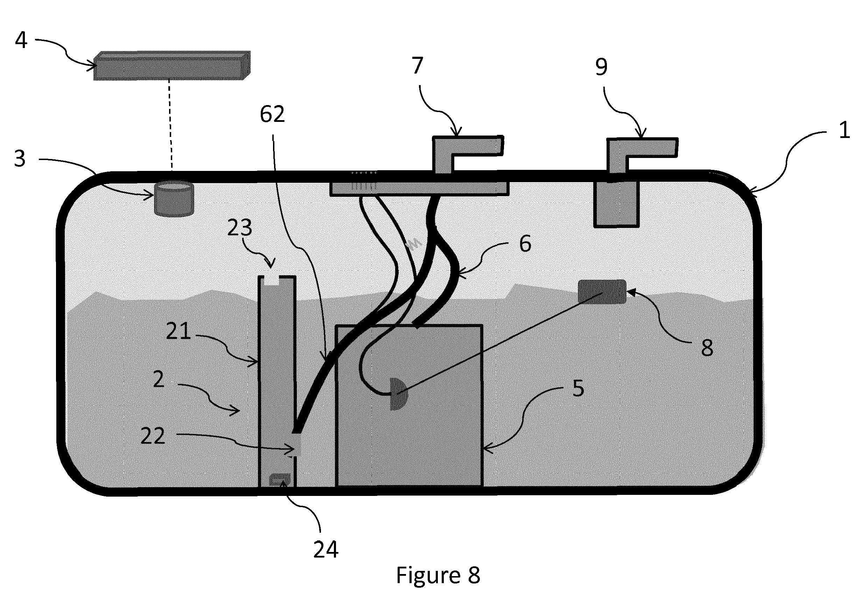

Figure 8 illustrates an exemplary embodiment in which the inlet [22] is placed in or near the bottom side of the housing [21]. The inlet [22] is connected to a secondary fuel line [62] branched-off from the main fuel line [6].
In the examples of Figures 7 and 8, the secondary fuel lines [61] and [62] can comprise an over pressure relief valve that can be configured to open at a predetermined pressure threshold in order to ensure liquid fuel enters into the housing [21] such that the housing stores a predetermined amount of fuel at the end of a drive cycle.
In another embodiment, when the engine goes off the fuel pump module [5] can be activated over a predetermined duration so as to allow the filling of the housing [21] through the secondary fuel line. Then the fuel pump module [5] can be deactivated and a stabilization period can be initiated before starting the leak test. The advantage of such stabilization period is to minimize any influence from heat of the fuel pump.

The test cell [2] comprises a heater [24] mounted within the housing [21]. When leak detection is required, the heater [24] introduces a predetermined amount of energy in the housing so that the predetermined amount of fuel presents in the housing [21] is vaporized creating fuel vapor. In the example of Figure 1, the test cell [2] is mounted in the bottom wall of the tank. In another particular embodiment, the test cell [2] can be positioned on a side wall or top wall of the tank.

In a particular embodiment, the test cell [2] is in the form of a stand-alone module (i.e. the housing [21] and the heater [24] form one block). In a particular embodiment, the test cell [2] can be positioned through an opening made in the bottom wall of the tank and can be attached in a sealed manner. Advantageously, the test cell [2] can comprise connection means which allow it to be easily plugged to and unplugged from the tank [1]. For example, a cam lock system or a mason jar system can be used for this purpose. In another particular embodiment, the test cell [2] can be welded to the tank (during the manufacturing of the tank or after the tank has been manufactured). In another particular embodiment, the test cell [2] can be secured on the inside of the tank by means of a dovetail connection or a clip connection.

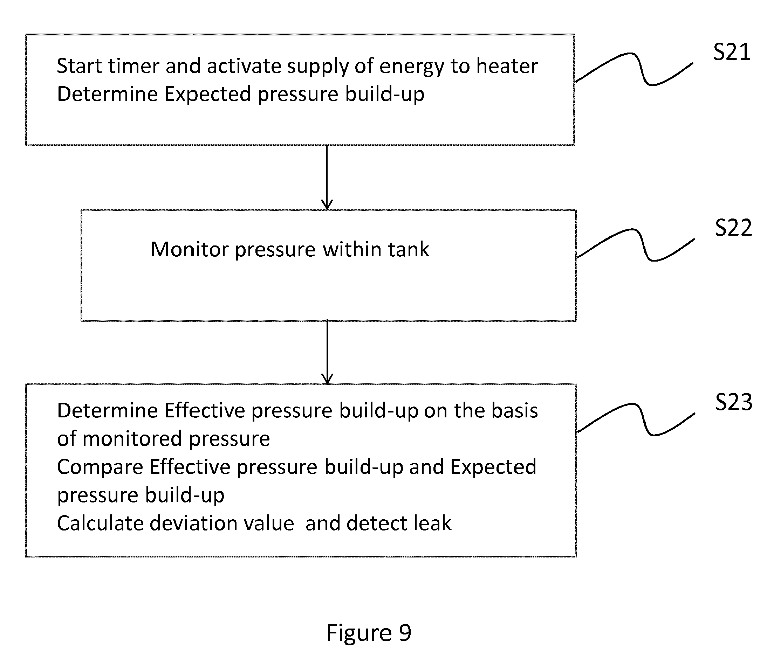

In the example of Figure 1, the heater [24] is an electrical heater. The heater [24] can function based on an operating wattage of for example, approximately 70 Watts. It can be appreciated, however, that other operating wattages can be implemented, depending upon design considerations. 70 Watts is only a suggested operating wattage for heating the predetermined amount of fuel presents in the test cell and does not constitute a limiting feature of the embodiments.
In a particular embodiment, the electrical energy supplied to the heater [24] is time-controlled. For example, a timer of predetermined duration can be used for this purpose.
In a particular embodiment, the pressure sensor [3] is controlled such that it measures/monitors the pressure within the tank from the start of the timer until the expiry of said timer. Such measurement/monitoring of pressure allows determining/estimating the amount of pressure build-up created within the tank at a given rate.
In a particular embodiment, the controller [4] is configured such that it executes a leak test according to a predetermined test sequence. In another particular embodiment, the controller [4] is configured such that it executes a leak test upon detection of a predetermined event, for example an "engine off" event (i.e. combustion engine is off).
The controller [4] includes a series of computer-executable instructions, as described below in relation to Figure 9, which allow the controller to determine the presence or absence of a leak in the tank based on pressure measurements and the amount of energy introduced by the heater in the test cell. These instructions may reside, for example, in a RAM of the controller. Alternatively, the instructions may be contained on a data storage device with a computer readable medium (for example, USB key or CD-ROM).
Figure 9 illustrates a leak test according to a particular embodiment of the invention. More precisely, Figure 9 illustrates a flowchart of instructions depicting logical operational steps for detecting a leak in the tank, in accordance with a particular embodiment of the invention.

Beginning at step S21, the controller [4] starts a timer and activates the supply of electrical energy to the heater [24]. The duration of the timer is predetermined (i.e. fixed in advance) or determined (i.e. calculated) as a function of the level or amount of fuel in the housing [21]. In a particular embodiment, the controller is configured to energize the heater such that between about 60% to 100% of the fuel in the test cell is vaporized. Knowing the operating wattage of the heater and the activation duration of the heater, the controller can determine (i.e. obtain) the amount of energy introduced by the heater in the test cell. For example, the determined amount of energy introduced by the heater in the test cell can be compared to a look-up table to determine an expected pressure build-up within the tank. In a particular embodiment, the look-up table includes pressure build-up values versus amount of energy values. Different look-up tables for a range of temperatures may be used. At step S22, the controller monitors the pressure within the tank by means of the pressure sensor [3], while the fuel in the housing [21] is vaporized. At step S23, upon expiry of the timer, the controller deactivates the supply of electrical energy to the heater and determines an effective pressure build-up on the basis of the monitored pressure. Then, the controller compares the effective pressure build-up and the expected pressure build-up and, for example, calculates a deviation value between the effective pressure build-up and the expected pressure build-up. For example, the deviation value is compared to a predetermined threshold value. For example, the controller is configured to detect a presence of a leak in the tank when the deviation value exceeds the predetermined threshold value. In a particular embodiment, the controller can use a look-up table relating sizes of leak holes to deviation values.
It can be noted the following; if there is no leak hole in the tank then it will reach a steady state pressure with the peak at the time the fuel heating is complete; if there is a small leak hole in the tank then the steady state pressure will be lower and will likely decay rapidly after the heat is turned off; if there is a larger leak hole in the tank then no pressure will build-up, as the rate of the increase in vapor pressure is not fast enough to counteract the rate of the flow through the leak hole.
In a particular embodiment, the controller [4] is configured to monitor and analyze the evolution of pressure within the tank before, during and after the fuel heating phase. The controller can then be configured to detect a presence of a leak in the tank when the pressure within the tank decays at a predetermined rate over a predetermined period starting from the end of the fuel heating phase.

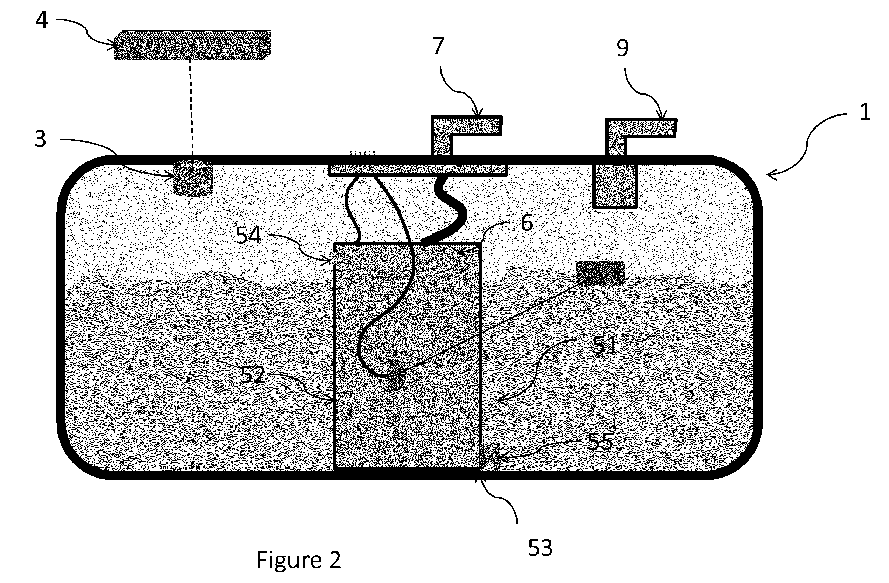

Figure 2 illustrates a second exemplary embodiment of a vehicle fuel storage system in which the test cell is integrated in a fuel pump module [51]. In other words, in the example of Figure 2 the fuel pump module [51] forms the test cell. More precisely, the fuel pump module [51] has a dual-operating mode; a fuel pumping mode and a fuel vaporizing mode. The fuel pump module comprises a casing [52] equipped with an inlet [53] through which liquid fuel can enter and an outlet [54] through which fuel vapor can escape into the vapor space. The inlet [53] comprises a check valve [55] configured to prevent the fuel in the casing [52] to flow back into the tank [1]. For example, the pump coil can be used to heat the fuel in the casing [52]. In another embodiment, the casing [52] may comprise another heating element. For example, when operating in the fuel vaporizing mode, the pump coil is energized for heating the fuel in the casing [52] such that between about 60% to 100% of the fuel in the casing is vaporized.

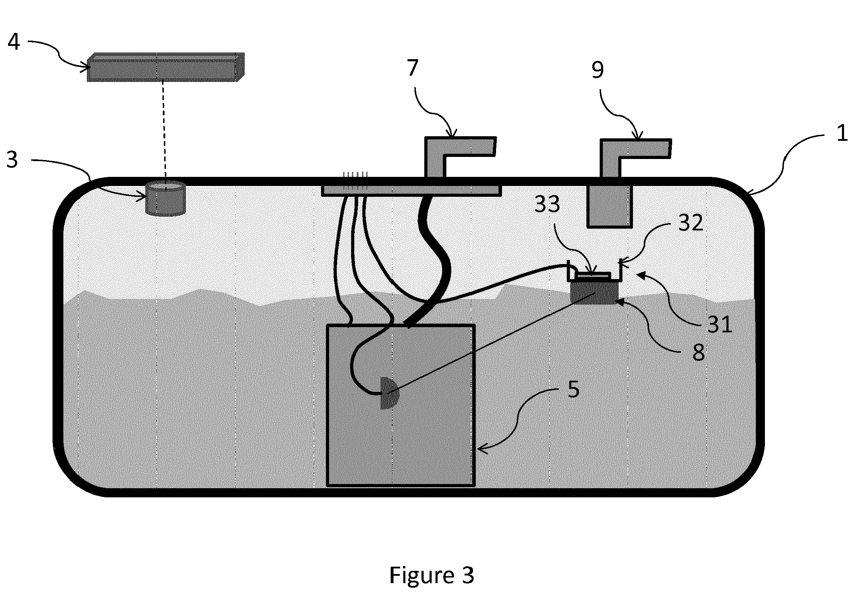

Figure 3 illustrates a third exemplary embodiment of a vehicle fuel storage system in which a test cell [31] is mounted on the float [8]. The test cell [31] comprises a housing [32] and a heater [33]. The test cell [31] functions in a similar manner as the test cell [2] of Figure 1.

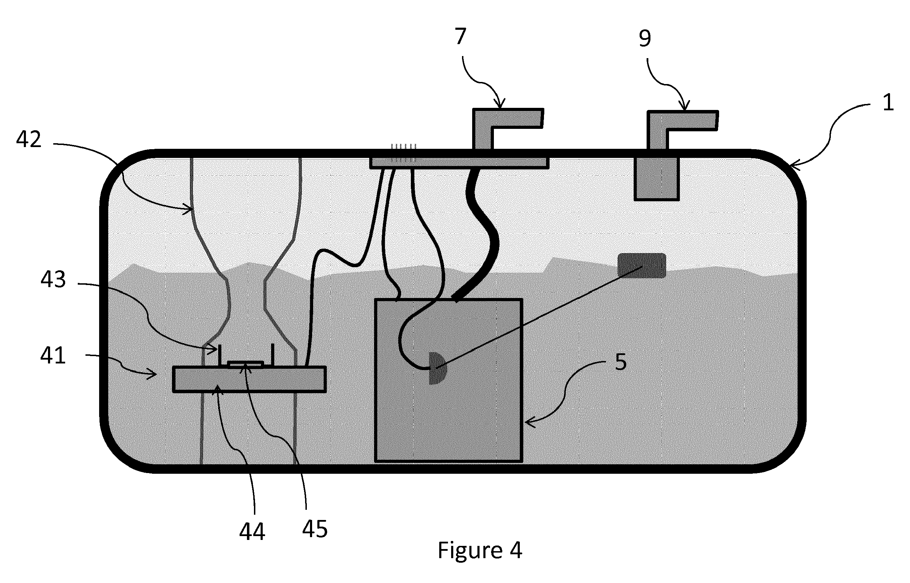

Figure 4 illustrates a fourth exemplary embodiment of a vehicle fuel storage system in which a test cell [41] is mounted on a reinforcement structure [42], in the form of a column connecting the bottom wall and the top wall of the tank. In the example of Figure 4, the test cell [41] is slidably mounted to the reinforcement structure [42]. The test cell [41] comprises a housing [43] which can be mounted onto or integrated into the top of a float [44]. The float [44] is slidably mounted to the reinforcement structure [42]. It further comprises a heater [45] mounted within the housing. The test cell [41] functions in a similar manner as the test cell [2] of Figure 1.

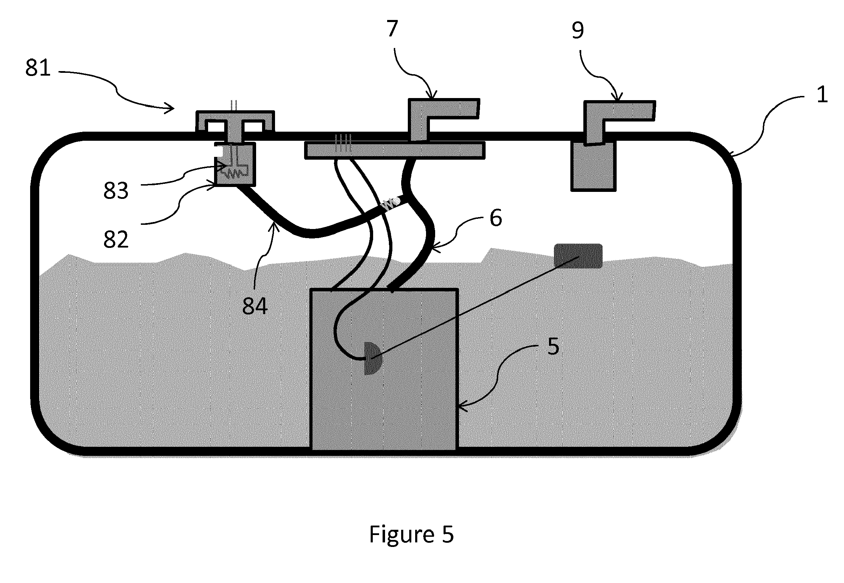

Figure 5 illustrates a fifth exemplary embodiment of a vehicle fuel storage system in which a test cell [81] is mounted on the top wall of the tank. For example, the test cell [81] can be inserted from the exterior of the tank and through an opening made in the top wall of the tank. The test cell [81] can be attached to the tank by welding or by any other known leak-tight attachment means. The test cell [81] comprises a housing [82] and a heater [83]. The test cell [81] functions in a similar manner as the test cell [2] of Figure 1. The housing [82] comprises an inlet which is connected to a secondary fuel line [84] branched-off from the main fuel line [6]. The housing [82] comprises an outlet for the release of fuel vapor into the vapor dome and for the spillover of fuel. Since the housing [82] is actively filled via the secondary fuel line [84], the advantage of allowing spillover is to keep a predetermined amount of fuel in the housing.

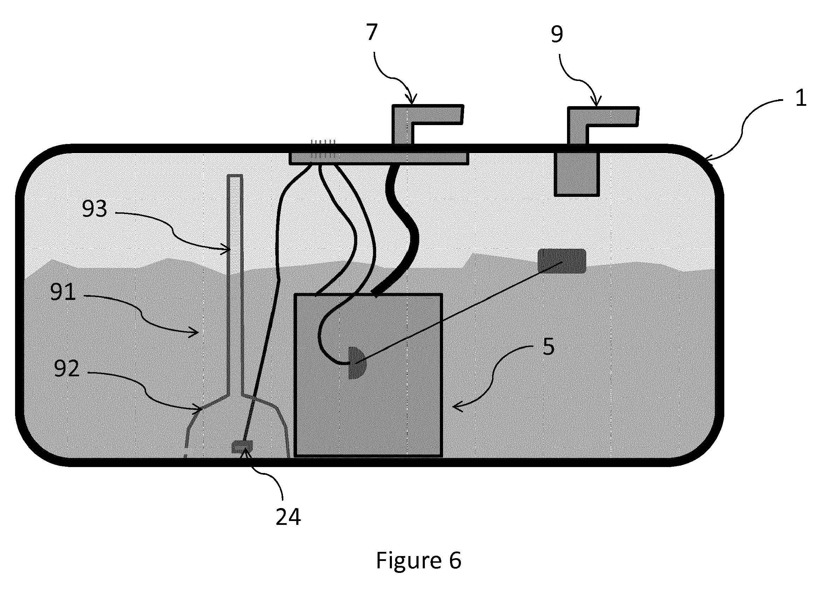

Figure 6 illustrates a sixth exemplary embodiment of a vehicle fuel storage system in which a test cell [91] comprises a housing which is shaped such that its lower portion has a width to height aspect ratio that is greater than that of its upper portion. This allows that the amount of fuel in the housing is minimally proportional to the height of fuel in the tank. It means that as the level of fuel increases inside the tank the amount of fuel within the housing doesn't increase significantly. The goal of this is to minimize the variation in the amount of fuel heated with respect to the fuel height in the tank, in order to minimize variation in the associated pressure change. In the illustrated example, the housing comprises a lower dome-shaped portion [92] and an upper tubular-shaped portion [93].

## Claims

1. A fuel tank leak detection system comprising:
a test cell for receiving a portion of on-board fuel;
a heater mounted within the test cell for heating the fuel in the test cell so as to create a pressure build-up within the fuel tank; and
a controller for:
- obtaining a first information relative to the amount of pressure build-up created within the fuel tank and a second information relative to the amount of energy introduced by the heater in the test cell; and
- detecting a leak using said first and second information.

2. Fuel tank leak detection system according to claim 1, wherein the test cell comprises an inlet for receiving a portion of on-board fuel and an outlet for releasing fuel vapor into a vapor space within the fuel tank.

3. Fuel tank leak detection system according to any of claims 1 to 2, wherein the test cell is mounted on or integrated in a fuel tank accessory.

4. Fuel tank leak detection system according to claim 3, wherein the fuel tank accessory is chosen from the following group: a fuel pumping device, a fuel level measuring device, a reinforcing structure, a venting device.

5. Fuel tank leak detection system according to any of claims 1 to 4, wherein the heater comprises a PTC resistor.

6. Fuel tank leak detection system according to any of claims 1 to 5, wherein it further comprises a pressure sensor for monitoring the pressure in the fuel tank, said first information being determined using the monitored pressure.

7. Fuel tank leak detection system according to any of claims 1 to 6, wherein the controller is configured for:
- obtaining a third information relative to a pressure decay within the fuel tank after the creation of pressure build-up within the fuel tank;
- detecting a leak using said first, second and third information.
